# EUROPÄISCHE PATENTSCHRIFT

(11) **EP 0 428 020 B1**
(45) Veröffentlichungstag und Bekanntmachung des Hinweises auf die Patenterteilung: **08.09.1993**
(21) Anmeldenummer: 90120961.9
(22) Anmeldetag: 01.11.1990
(51) Int. Cl.: C08L 81/02, C08K 5/32

(54) **Mischungen aus Polyarylensulfiden, nitrogruppenhaltigen Vernetzern und Glasfasern**
Blends of polyarylene sulfides, nitrogroup containing crosslinkers and glassfibres
Mélanges de sulfure de polyarylène, d'agents de réticulation contenant des groupes nitro et de fibres de verre

(30) Priorität: 14.11.1989 DE 3937754
(43) Veröffentlichungstag der Anmeldung: 22.05.1991
(73) Patentinhaber: BAYER AG, 51368 Leverkusen (DE)
(72) Erfinder: Köhler, Burkhard, Dr., W-4150 Krefeld 11 (DE); Heinz, Hans-Detlef, Dr., W-4150 Krefeld 11 (DE)

(56) Entgegenhaltungen:
- EP-A- 0 345 550
- EP-A- 0 345 551
- EP-A- 0 381 865
- PATENT ABSTRACTS OF JAPAN, Band 13, Nr. 249 (C-605)[3597], 9. Juni 1989; & JP-A-1 54 066

## Beschreibung

Die Erfindung betrifft Mischungen aus Polyarylensulfiden, nitrogruppenhaltigen Vernetzern und gegebenenfalls anderen Zusätzen. Formkörper aus diesen Mischungen zeichnen sich durch gute mechanische Eigenschaften aus.

Polyarylensulfide (PAS) sind bekannt (siehe z.B. US-PS 3 354 129, EP 171 021). Sie sind inerte, hochtemperaturbeständige Thermoplaste, die einen hohen Füllgrad, z.B. mit Glasfasern oder anderen anorganischen Füllstoffen erlauben. Der Einsatz dieser Polymeren, insbesondere des Polyphenylensulfids (PPS), nimmt in Bereichen zu, die bislang Duroplasten vorbehalten waren.

PAS haben mechanische Eigenschaften, die für einige Anwendungen, z.B. im Spritzgußbereich, unzureichend sind. Insbesondere sind die Biege- oder Zugfestigkeit und die Schlagzähigkeit für die Praxis häufig nicht ausreichend. Es hat sich daher als Vorteil erwiesen, PAS z.B. durch Mischung mit anderen Thermoplasten, mit Polycarbonaten, in den genannten Eigenschaften zu verbessern (JA-A 51-69952, EP-A 104 543, US-A 4 021 596).

Für bestimmte Anwendungsgebiete ist das Eigenschaftsprofil derartiger Mischungen jedoch nicht immer ganz befriedigend.

Es ist ferner bekannt, das Maleinimide mit mehreren Maleinimidfunktionen unter oxidativen Bedingungen die Eigenschaften von PAS verbessern (JP-A 202 162, EP-A 105 639). Jedoch verschlechtern Maleinimidstrukturen durch ihren polaren Charakter die Beständigkeit von PAS gegenüber polaren Solventien, wie Wasser oder Alkoholen. Wünschenswert wären daher PAS-Modifikatoren, die nur wenige oder keine Maleinimidstrukturen aufweisen, aber sich ebenfalls verbessernd auf die mechanischen Eigenschaften auswirken.

Der Erfindung liegt die Erkenntnis zugrunde, das die Reaktionsprodukte von PAS, besonders von PPS, mit geringen Mengen an ausgewählten Nitroverbindungen und gegebenenfalls anderen Zusatzstoffen, besonders mit Aminosilan-geschlichteten Füll- oder Verstarkungsstoffen, sich durch ihre Zähigkeit, Biegefestigkeit und Randfaserdehnung besonders auszeichnen.

Gegenstand der Erfindung sind Mischungen aus
A) von 99,9 bis 20 Gew.-%, vorzugsweise von 30 bis 70 Gew.-% Polyarylensulfid, vorzugsweise Polyphenylensulfid
B) von 0,1 bis 10 Gew.-%, vorzugsweise von 0,2 bis 2 Gew.-% Nitroverbindungen der Formel I 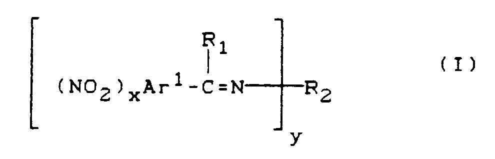 wobei
   - Ar¹: ein di-, tri- oder tetravalenter aromatischer C₆-C₁₄-Rest ist,
   - R¹: ein Wasserstoffatom, ein C₁-C₂₂-Alkylrest, ein C₇-C₂₂-Alkylarylest oder ein C₆-C₁₄-Arylrest, vorzugsweise ein Wasserstoffatom ist,
   - R²: ein di-, tri- oder tetravalenter aliphatischer, cycloaliphatischer, aromatischer oder aliphatisch-aromatischer, vorzugsweise ein aromatischer oder aliphatisch-aromatischer Rest, mit 3 bis 100, vorzugsweise mit 6 bis 20 C-Atomen ist, die gegebenenfalls auch in Ringen angeordnet sein können, wobei zwei oder mehrere aromatische Ringe gegebenenfalls durch eine chemische Bindung, einen Alkylidenrest, ein Sauerstoffatom, ein Schwefelatom, eine Disulfidbrücke, eine Carbonylgruppe, eine Sulfongruppe und/oder einen 5 bis 6 gliedrigen Heterocyclus verknüpft sein können,
   oder für den Fall, daß y für die Zahl 2 steht, eine chemische Einfachbindung bedeutet,
   - x: für die Zahlen 1, 2 oder 3, vorzugsweise für 1 steht und
   - y: für die Zahlen 2, 3 oder 4, vorzugsweise für 2 steht und
C) von 0 bis 79,9 Gew.-%, bevorzugt von 9,9 bis 69,9 Gew.-% mineralische Füll- und Verstärkungsstoffe, die vorzugsweise mit Aminogruppen-haltigen Trialkoxysilanen geschlichtet sind.

Polyarylensulfide im Sinne der Erfindung sind z.B. die durch Umsetzung von Dihalogenaromaten, insbesondere von p-Dichlorbenzol mit Schwefelspendern (z.B. Natriumsulfid) erhältlichen an sich bekannten und handelsüblichen (TEDUR®, RYTON®) linearen oder verzweigten Polykondensate (z.B. US-PS 3 354 129, EP-OS 171 021).

Beispiele für erfindungsgemäße Stoffe der Formel I sind die Bisazomethine erhältlich aus 2-, 3- oder 4-Nitrobenzaldehyd mit Bis(4-aminophenyl)methan, 4,4′-Diaminodiphenylether, Benzidin, 2,2′-Dimethyl- oder 2,2′-Dimethoxy-benzidin, 4,4′-Diaminodiphenylsulfon, 4,4′-Diaminodiphenylsulfid, 4,4′-Diaminodiphenyldisulfid, 4,4′-Diaminobenzophenon, Hexamethylendiamin oder Hydrazin.

Die Herstellung der Verbindungen der Formel I erfolgt z.B. durch Umsetzung des Aldehyds mit dem Amin in Gegenwart eines Azeotropbildners analog Organikum, Aufl., 11, VEB-Verlag, Seite 425.

Erfindungsgemäße Füll- und Verstärkungsstoffe sind bevorzugt mit aminogruppenhaltigen Trialkoxysilanen geschlichtete Glasfasern, Kaoline, Talkum-, Glimmer- oder Quarzmehltypen.

Gegebenenfalls können auch anstelle der Glasfasern handelsübliche Glaskugeln als mineralische Füllstoffe eingesetzt werden (z.B. Ballotini-Glaskugeln).

Weitere erfindungsgemäß mineralische Füllstoffe oder Zusatzstoffe sind z.B. Metalloxide und -sulfide (z.B. TiO₂, ZnO, ZnS), Graphit, Ruß, Fasern (z.B. aus Quarz, Kohle), Carbonate (z.B. MgCO₃, CaCO₃) oder Sulfate (z.B. CaSO₄, BaSO₄), Metallpulver, -fasern, -flitter oder -flocken.

Gegebenenfalls können den erfindungsgemäßen Mischungen noch Bismaleinimide von Diaminen z.B. von Methylendianilin, m- oder p-Phenylendiamin oder von 4,4′-Diaminodiphenylsulfon zugemischt werden.

Als weitere übliche Zusatzstoffe können Pigmente, Entformungsmittel, E-Wachse, Fließhilfsmittel, Nucleierungsmittel oder Stabilisatoren eingesetzt werden.

Die Herstellung der erfindungsgemäßen Mischungen erfolgt bei Temperaturen oberhalb des Schmelzpunktes des PAS unter Scherung, vorzugsweise in Knetern oder Extrudern.

Die Herstellung der erfindungsgemäßen Mischungen aus Polyarylensulfiden, Nitrogruppen-haltigen Vernetzern und bekannten handelsüblichen Füll- und Verstärkungsstoffen kann nach an sich bekannten Compoundierverfahren auf Ein- oder Mehrschneckenextrudern, vorzugsweise Extrudern mit Entgasungsvorrichtung, z.B. ZSK-Maschinen, geeigneten Knetern wie BUSS-KO-Knetern oder Agglomeratoren (z.B. Pallmann/Condux) erfolgen.

Bei der Compoundierung sind Einschneckenextruder solchen mit zwei oder mehr Schnecken vorzuziehen.

Außerdem ist es möglich, diese Mischungen über Pulvermischtechnologie aus den einzelnen Komponenten, dosiert oder als Gemisch, herzustellen.

Solche Pulvermischungen können z.B. auf Konusschnecken-, Taumel-, Turbinen-, Rhönrad- oder ähnlichen Mischern hergestellt werden.

Weiterer Gegenstand der Erfindung ist die Verwendung der erfindungsgemässen Mischungen als Formmassen zur Herstellung von Formkörpern, Halbzeugen, Folien und Fasern.

Gegenstand der Erfindung sind ferner die aus den erfindungsgemäßen Mischungen erhaltenen Formkörper.

Die erfindungsgemäßen Mischungen können auf übliche Weise zu Formteilen, Halbzeug, Fasern, Folien, Profilen usw. verarbeitet werden. Sie können generell in vorteilhafter Weise dort eingesetzt werden, wo thermoplastisch verarbeitbare Massen verwendet werden.

### Beispiele

Die Herstellung der Mischungen erfolgte auf einem Doppelwellenextruder ZSK 32 von Werner & Pfleider bei 320°C.

Das verwendete Polyphenylensulfid (PPS) wies eine Schmelzviskosität von 30 Pa·s (gemessen bei 306°C, und einer Schergeschwindigkeit von 1000 1/s) auf und wurde nach EP-A 171 021 hergestellt.

Als Glasfaser wurde die mit Aminogruppen-haltigen Trialkoxysilan geschlichtete Glasfaser CS 7916® zu 40 Gew.-% eingesetzt.

Die Mischungen wurden granuliert und zu Prüfstäben der Maße 80x10x4 mm verspritzt und hinsichtlich Biegefestigkeit, Randfaserdehnung und Schlagzähigkeit aₙ (reversed notched ISO 180) untersucht.

### Vergleichsbeispiel

Gemischt wurde 60 Gew.-% PPS mit 40 Gew.-% Glasfasern.

Die aus dieser Mischung erhaltenen Prüfstäbe zeigten folgende mechanische Kennwerte:
Biegefestigkeit 240 MPa, Randfaserdehnung 1,8 %, Schlagzähigkeit aₙ 28 kJ/m².

### Beispiel 1

Gemischt wurden 59 Gew.-%. PPS und 1 Gew.-% des Bisazomethins aus 4-Nitrobenzaldehyd und Bis(4-aminophenyl)methan mit 40 Gew.-% Glasfasern. Die hieraus erhaltenen Prüfstäbe zeigten folgende mechanische Kennwerte:
Biegefestigkeit 303 MPa, Randfaserdehnung 2,4 %, Schlagzähigkeit aₙ 48 kJ/m².

### Beispiel 2

Gemischt wurden 59 Gew.-% PPS und 1 Gew.-% des Hydrazons erhalten aus 2 Mol 3-Nitrobenzaldehyd und 1 Mol Hydrazin mit 40 Gew.-% Glasfasern. Die hieraus erhaltenen Prüfstäbe zeigten folgende mechanische Kennwerte:
Biegefestigkeit 308 MPa, Randfaserdehnung 2,4 %, Schlagzähigkeit aₙ 45 kJ/m².

## Patentansprüche

1. Mischungen aus
A) von 99,9 bis 20 Gew.-% Polyarylensulfid,
B) von 0,1 bis 10 Gew.-% Nitroverbindungen der Formel I 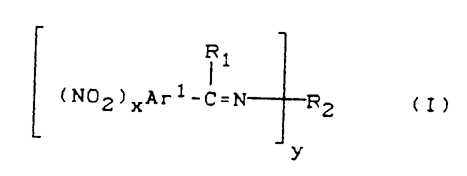 wobei
Ar¹ ein di-, tri- oder tetravalenter aromatischer C₆-C₁₄-Rest ist,
R¹ ein Wasserstoffatom, ein C₁-C₂₂-Alkylrest, ein C₇-C₂₂-Alkylarylest oder ein C₆-C₁₄-Arylrest ist,
R² ein di-, tri- oder tetravalenter aliphatischer, cycloaliphatischer, aromatischer oder aliphatisch-aromatischer, Rest, mit 3 bis 100 C-Atomen ist, die gegebenenfalls auch in Ringen angeordnet sein können, wobei zwei oder mehrere aromatische Ringe gegebenenfalls durch eine chemische Bindung, einen Alkylidenrest, ein Sauerstoffatom, ein Schwefelatom, eine Disulfidbrücke, eine Carbonylgruppe, eine Sulfongruppe und/oder einen 5 bis 6 gliedrigen Heterocyclus verknüpft sein können,
oder für den Fall, das y für die Zahl 2 steht, eine chemische Einfachbindung bedeutet,
x für die Zahlen 1, 2 oder 3 steht und
y für die Zahlen 2, 3 oder 4 steht und
C) von 0 bis 79,9 Gew.-% mineralische Füll- und Verstärkungsstoffe.

2. Verwendung von Mischungen nach Anspruch 1 zur Herstellung geformter Körper.

3. Formkörper aus Mischungen nach Anspruch 1.

## Claims

1. Mixtures of
A) 99.9 to 20% by weight polyarylene sulfide,
B) 0.1 to 10% by weight nitro compounds corresponding to formula I 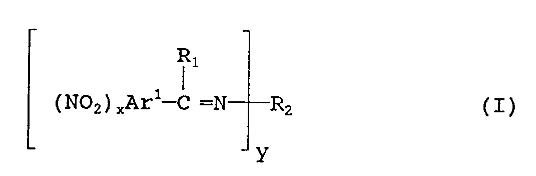 in which
Ar¹ is a di-, tri- or tetrafunctional aromatic C₆₋₁₄ radical,
R¹ is a hydrogen atom, a C₁₋₂₂ alkyl radical, a C₇₋₂₂ alkylaryl radical or a C₆₋₁₄ aryl radical,
R² is a di-, tri- or tetrafunctional aliphatic, cycloaliphatic, aromatic or aliphatic-aromatic radical containing 3 to 100 carbon atoms which may even be arranged in two rings; two or more aromatic rings may optionally be attached by a chemical bond, an alkylidene radical, an oxygen atom, a sulfur atom, a disulfide bridge, a carbonyl group, a sulfone group and/or a 5- to 6-membered heterocycle
or, where y is the number 2, represents a single chemical bond,
x is the number 1, 2 or 3, and
y is the number 2, 3 or 4, and
C) 0 to 79.9% by weight mineral fillers and reinforcing materials.

2. The use of the mixtures claimed in claim 1 for the production of mouldings.

3. Mouldings of the mixtures claimed in claim 1.

## Revendications

1. Mélanges constitués de :
A) 99,9 à 20 % en poids de poly(arylènesulfure),
B) 0,1 à 10 % en poids de composés nitrés de formule I 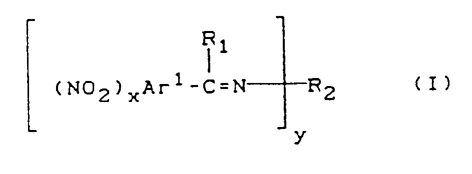 dans laquelle
Ar¹ est un reste aromatique en C₆ à C₁₄ divalent, trivalent ou tétravalent,
R¹ est un atome d'hydrogène, un reste alkyle en C₁ à C₂₂, un reste alkylaryle en C₇ à C₂₂ ou un reste aryle en C₆ à C₁₄,
R² est un reste aliphatique, cycloaliphatique, aromatique ou aliphatique-aromatique divalent, trivalent ou tétravalent ayant 3 à 100 atomes de carbone, qui peuvent aussi être disposés le cas échéant en noyaux, deux ou plus de deux noyaux aromatiques pouvant être liés éventuellement par une liaison chimique, un reste alkylidène, un atome d'oxygène, un atome de soufre, un pont disulfure, un groupe carbonyle, un groupe sulfo et/ou un hétérocycle pentagonal ou hexagonal,
ou bien, au cas où y a la valeur 2, une liaison chimique simple,
x représente les nombres 1, 2 ou 3 et
y représente les nombres 2, 3 ou 4 et
C) 0 à 79,9 % en poids de substances minérales servant de charge et d'armature.

2. Utilisation de mélanges suivant la revendication 1 pour la fabrication de corps façonnés.

3. Corps façonnés obtenus à partir de mélanges suivant la revendication 1.
